# EUROPÄISCHE PATENTANMELDUNG

(11) **EP 4 325 387 A1**
(43) Veröffentlichungstag der Anmeldung: **21.02.2024**
(21) Anmeldenummer: 22191189.4
(22) Anmeldetag: 19.08.2022
(51) Int. Cl.: G06F 21/60, G06F 21/71, G06F 21/46, G06F 21/55

(54) **VERFAHREN ZUM BEREITSTELLEN EINES DIGITALEN SCHLÜSSELS**

(71) Anmelder: Steen Harbach AG, 51371 Leverkusen (DE); Kavun, Elif Bilge, 94032 Passau (DE)
(72) Erfinder: Bartsch, Dr. Witali, 51371 Leverkusen (DE)
(74) Vertreter: dompatent von Kreisler Selting Werner - Partnerschaft von Patent- und Rechtsanwälten mbB

(57) **Zusammenfassung**

Ein Verfahren (100) zum Bereitstellen eines digitalen Schlüssels durch ein Computersystem (12) für eine Prozessoreinheit (14), wobei der digitale Schlüssel innerhalb eines Anwendungscodes bereitgestellt wird und in dem Anwendungscode eine Folge von Anweisungen (20) abgespeichert ist. Bei dem Verfahren (100) wird durch ein Computersystem (12) ein digitaler Schlüssel erzeugt (110) und in mindestens zwei Schlüsselteile aufgeteilt (120). Die Schlüsselteile werden in mindestens zwei Anweisungen (20) des Anwendungscodes eingebettet (130), welcher von dem Computersystem (12) an die Prozessoreinheit (14) übermittelt (140) wird.

## Beschreibung

Die vorliegende Erfindung ist auf dem Gebiet der Kryptographie angesiedelt. Insbesondere betrifft die vorliegende Erfindung ein Verfahren zum Bereitstellen eines digitalen Schlüssels durch ein Computersystem für eine Prozessoreinheit sowie ein entsprechendes Verfahren zum Rekonstruieren eines digitalen Schlüssels durch eine Prozessoreinheit.

In einigen Anwendungsszenarien ist es wünschenswert, einen digitalen Schlüssel für eine Prozessoreinheit bereitzustellen. Der digitale Schlüssel enthält geheime Informationen, die für eine spezifische Prozessoreinheit vorgesehen sind. Beispielsweise können die bereitgestellten geheimen Informationen für eine spätere Authentifizierung der Prozessoreinheit verwendet werden.

Aus der Kryptographie sind zahlreiche Verfahren für die Bereitstellung digitaler Schlüssel bekannt, die jeweils Vor- und Nachteile aufweisen. Bei sämtlichen Verfahren ist es jedoch erforderlich, den digitalen Schlüssel in einer sicheren Weise bereitzustellen, so dass Unbefugte keinen Zugriff auf den bereitgestellten Schlüssel haben. Auch wenn in der Regel kein Verfahren eine hundertprozentige Sicherheit bieten kann, so ist es zumindest wünschenswert, einen potenziellen Angriff seitens eines Unbefugten so weit wie möglich zu erschweren.

Unter Berücksichtigung der vorstehend beschriebenen Situation ist es Aufgabe der vorliegenden Erfindung, ein Verfahren zum Bereitstellen eines digitalen Schlüssels für eine Prozessoreinheit zu liefern, bei der ein Zugriff auf den digitalen Schlüssel durch einen Unbefugten möglichst erschwert ist.

Zur Lösung der genannten Aufgabe wird mit der vorliegenden Erfindung ein Verfahren zum Bereitstellen eines digitalen Schlüssels durch ein Computersystem für eine Prozessoreinheit vorgeschlagen, wobei der digitale Schlüssel innerhalb eines Anwendungscodes bereitgestellt wird und wobei in dem Anwendungscode eine Folge von Anweisungen abgespeichert ist. Bei dem erfindungsgemäßen Verfahren sind die nachfolgenden Verfahrensschritte vorgesehen:
- Erzeugen eines bereitzustellenden digitalen Schlüssels durch ein Computersystem;
- Aufteilen des digitalen Schlüssels in mindestens zwei Schlüsselteile;
- Einbetten der Schlüsselteile in mindestens zwei Anweisungen des Anwendungscodes; und
- Übermitteln des Anwendungscodes von dem Computersystem an die Prozessoreinheit.

Bei dem erfindungsgemäßen Verfahren wird der digitale Schlüssel in einen Anwendungscode eingebettet und darin "versteckt". Dabei werden die unterschiedlichen Schlüsselteile in verschiedenen Anweisungen des Anwendungscodes hinterlegt. Die Prozessoreinheit verfügt über die Kenntnis darüber, an welchen Stellen des Anwendungscodes die geheimen Informationen hinterlegt sind, so dass die Prozessoreinheit nach Erhalt des Anwendungscodes den digitalen Schlüssel und die darin enthaltenen geheimen Informationen rekonstruieren kann. Auf diese Weise wird der zu übertragende Schlüssel derart im Anwendungscode versteckt, dass es für einen potenziellen Angreifer erschwert wird, die geheimen Informationen zu rekonstruieren, da ihm die Kenntnis darüber fehlt, an welcher Stelle des Anwendungscode die einzelnen Schlüsselteile hinterlegt sind. Insofern weist der Anwendungscode Bereiche auf, in denen Anweisungen codiert sind, sowie Bereiche, in denen die geheimen Informationen codiert sind. Das Aufteilen des digitalen Schlüssels sowie das Einbetten der Schlüsselteile erfolgt durch das Computersystem, das im Rahmen der vorliegenden Erfindung auch als Compilersystem bezeichnet werden kann.

Gemäß einer Ausführungsform der vorliegenden Erfindung kann vorgesehen sein, dass das Einbetten der Schlüsselteile in mindestens zwei Anweisungen des Anwendungscodes das Einbetten der Schlüsselteile in spezifische Felder der Anweisungen umfasst, die typischerweise ungenutzt bleiben. Dabei zeigt sich in der Praxis, dass bei einigen Befehlssätzen für Prozessoreinheiten Anweisungen vorgesehen sind, in denen spezifische Felder vorhanden sind, die nicht genutzt werden. Daher ist es von Vorteil, die Schlüsselteile in die ungenutzten Felder der Anweisungen anzuordnen. Auf diese Weise kann eine besonders effiziente Bereitstellung eines digitalen Schlüssels erfolgen. Durch die bevorzugte Ausführungsform kann also ein digitaler Schlüssel in einen Anwendungscode eingebettet werden, ohne dabei die Gesamtgröße des Anwendungscodes zu erhöhen.

Bevorzugt kann vorgesehen sein, dass der Anwendungscode als ein RISC-V (Reduced Instruction Set Computers V) Anwendungscode ausgebildet ist, wobei die Anweisungen insbesondere als R-Typ Anweisungen ausgebildet sind und wobei das Einbetten der Schlüsselteile bevorzugt in Funct7-Felder erfolgt. Wie bereits vorstehend ausgeführt, können die Schlüsselteile bevorzugt in ungenutzten Feldern der Anweisungen eingebettet werden. Ein Beispiel hierfür sind die genannten R-Typ Anweisungen der RISC-V Befehlssätze. Innerhalb der R-Typ Anweisungen sind bei beispielsweise die Funct7-Felder vorgesehen, die typischerweise ungenutzt sind. Damit bieten sich die Funct7-Felder besonders dafür an, dass die Schlüsselteile in diesen Feldern eingebettet werden. Auf diese Weise kann ein digitaler Schlüssel in einen Anwendungscode eingebettet werden, ohne die durch den Anwendungscode beanspruchte Datenmenge zu erhöhen. Dadurch kann eine besonders effiziente Bereitstellung des digitalen Schlüssels gewährleistet werden. Auch wenn vorstehend beispielsweise die Funct7-Felder der R-Typ Anweisungen genannt wurden, ist es jedoch für den Fachmann erkenntlich, dass die vorliegende Anwendung nicht auf die genannten Felder begrenzt ist. Vielmehr können die Schlüsselteile auch in einer Vielzahl anderer Felder bzw. anderer Anweisungen eingebettet werden.

In einer vorteilhaften Ausführungsform des erfindungsgemäßen Verfahrens kann ferner vorgesehen sein, dass das Erzeugen des bereitzustellenden digitalen Schlüssels durch das Computersystem die folgenden Verfahrensschritte aufweist:
- Erzeugen eines ersten Schlüssels durch das Computersystem, wobei in dem ersten Schlüssel geheime Informationen enthalten sind, die an die Prozessoreinheit übermittelt werden sollen;
- Auslesen eines Hardware-Identifikators aus der Prozessoreinheit, wobei der Hardware-Identifikator eine eindeutige Kennung der Prozessoreinheit aufweist; und
- Berechnen des bereitzustellenden digitalen Schlüssels durch das Computersystem, wobei das Berechnen aus dem ersten Schlüssel und dem Hardware-Identifikator erfolgt.

Der erste Schlüssel kann auch als ein Software-Schlüssel aufgefasst werden, da er software-basiert generiert wird und über keinerlei hardware-bezogene Informationen verfügt. In diesem ersten Schlüssel sind insbesondere keinerlei hardwareabhängigen Informationen enthalten, welche die Prozessoreinheit spezifizieren. Hingegen enthält der Hardware-Identifikator spezifische Informationen über die Prozessoreinheit. Insbesondere erlaubt der Hardware-Identifikator eine eindeutige Zuordnung der jeweiligen Prozessoreinheit, für die der digitale Schlüssel bereitgestellt werden soll. Der Hardware-Identifikator kann auch als Hardware-Fingerabdruck (im Englischen auch hardware fingerprint genannt) bezeichnet werden. Im Allgemeinen sind verschiedene Hardware-Identifikatoren bekannt, welche die eindeutige Identifizierung einer Prozessoreinheit erlauben. Nachfolgend werden einige konkrete Beispiele für den Hardware-Identifikator genannt. Das Auslesen des Hardware-Identifikators kann durch eine Anfrage des Computersystems an die Prozessoreinheit und eine anschließende Antwort durch die Prozessoreinheit an das Computersystem erfolgen. Die Berechnung des bereitzustellenden digitalen Schlüssels aus dem ersten Schlüssel und dem Hardware-Identifikator hat den Vorteil, dass für die spätere Rekonstruktion des ersten Schlüssels der Hardware-Identifikator der Prozessoreinheit zwingend bekannt sein muss. Anders ausgedrückt wird der erste Schlüssel mit dem Hardware-Identifikator verschlüsselt. Ein Unbefugter, dem es zuvor gelungen ist, Kenntnisse über den digitalen Schlüssel zu erlangen, kann daher nicht ohne Weiteres den ersten Schlüssel rekonstruieren. Auf diese Weise wird die Sicherheit des erfindungsgemäßen Verfahrens weiter erhöht. Bei der Berechnung des bereitzustellenden digitalen Schlüssels aus dem ersten Schlüssel und dem Hardware-Identifikator bieten sich verschiedene Möglichkeiten an. Beispielsweise kann der digitale Schlüssel als Summe aus dem ersten Schlüssel und dem Hardware-Identifikator berechnet werden. In diesem Fall kann die Prozessoreinheit, die im Besitz ihres spezifischen Hardware-Identifikators ist, den ersten Schlüssel durch Subtraktion des Hardware-Identifikators von dem empfangenen digitalen Schlüssel berechnen. In analoger Weise kann es auch vorgesehen sein, dass das Berechnen des bereitzustellenden digitalen Schlüssels durch Multiplikation des ersten Schlüssels und des Hardware-Identifikators erfolgt oder durch Subtraktion oder durch des Hardware-Identifikators vom ersten Schlüssel.

Gemäß dem erfindungsgemäßen Verfahren kann vorgesehen sein, dass der Hardware-Identifikator eine Seriennummer der Prozessoreinheit oder eine Seriennummer eines Speicherelements der Prozessoreinheit aufweist.

Ferner kann bei dem erfindungsgemäßen Verfahren vorgesehen sein, dass der Hardware-Identifikator spezifische Informationen eines Speicherelements, insbesondere eines DRAM-Speicherelements der Prozessoreinheit aufweist. Dabei wird der Umstand genutzt, dass die Speicherelemente einer Prozessoreinheit faktisch nie vollständig identisch sind, sondern marginale Unterschiede aufweisen, wodurch eine Identifizierung des Speicherelements bzw. der Prozessoreinheit ermöglicht wird.

Auch kann bei dem erfindungsgemäßen Verfahren vorgesehen sein, dass das Berechnen des bereitzustellenden digitalen Schlüssels aus dem ersten Schlüssel und dem Hardware-Identifikator die Anwendung eines XOR-Operators auf den ersten Schlüssel und den Hardware-Identifikator umfasst.

Gemäß einer bevorzugten Ausführungsform des erfindungsgemäßen Verfahrens kann vorgesehen sein, dass der Hardware-Identifikator als ein temperaturabhängiger Hardware-Identifikator ausgebildet ist. Dadurch kann die Sicherheit des erfindungsgemäßen Verfahrens weiter erhöht werden. Ein Angreifer, dem es zuvor gelungen ist, Kenntnis über den bereitgestellten digitalen Schlüssel und zudem auch Kenntnis über einen Hardware-Identifikator zu erlangen, kann dennoch nicht ohne Weiteres den ersten Schlüssel rekonstruieren, da der für die Entschlüsselung notwendige Schlüssel (= Hardware-Identifikator) nur bei einer spezifischen Temperatur ausgelesen werden kann. Wenn beispielsweise während der Erzeugung des bereitzustellenden digitalen Schlüssels durch das Computersystem ein Hardware-Identifikator bei einer Temperatur von 20 °C ausgelesen wurde, der Angriff durch den Unbefugten jedoch bei einer Temperatur von 25 °C durchgeführt wurde, so wird der Angreifer einen Hardware-Identifikator erlangen, der für die Rekonstruierung des ersten Schlüssels ungeeignet ist. Dadurch wird ein möglicher Angriff eines Unbefugten signifikant erschwert.

Gemäß einer vorteilhaften Ausführungsform des erfindungsgemäßen Verfahrens kann vorgesehen sein, dass der Hardware-Identifikator Informationen über die spezifische Ladezeit der Kondensatoren des DRAM-Speicherelements oder Informationen über die Latenzzeiten des DRAM-Speicherelements aufweist. Die spezifische Ladezeit der Kondensatoren des DRAM-Speicherelements und die Informationen über die Latenzzeiten des DRAM-Speicherelements sind spezifische Größen, die eine zuverlässige Identifizierung des entsprechenden DRAM-Speicherelements erlauben. Bei der späteren Rekonstruierung des ersten Schlüssels kann die Prozessoreinheit, welche Kenntnis über die Informationen betreffend das DRAM-Speicherelement hat, unter Verwendung dieser Informationen den digitalen Schlüssel entschlüsseln. Für einen potenziellen Angreifer, der nicht über die genannten Hardware-Informationen verfügt, ist es dagegen unmöglich (oder zumindest signifikant erschwert), ohne die notwendigen Hardware-Informationen in den Besitz des ersten Schlüssels zu gelangen.

Ferner kann gemäß einer bevorzugten Ausführungsform des erfindungsgemäßen Verfahrens vorgesehen sein, dass der Hardware-Identifikator durch ein auf maschinelles Lernen basierendes Verfahren ermittelt wird. Das auf maschinelles Lernen basierende Verfahren kann zuvor mit Trainingsdaten trainiert worden sein. Die Trainingsdaten können beispielsweise Temperaturwerte (oder Temperaturbereiche) sowie ausgelesene Messwerte (beispielsweise spezifisch ausgelesene Informationen eines DRAM-Speicherelements, insbesondere spezifische Informationen über die spezifische Ladezeit der Kondensatoren oder über die Latenzzeiten des Speicherelements) als Eingangsgrößen aufweisen sowie den Eingangsgrößen entsprechende Hardware-Identifikatoren als Ausgangsgrößen. Bei den ausgelesenen Messwerten kann es sich insbesondere um temperaturabhängige Werte handeln. Auf diese Weise kann das auf maschinelles Lernen basierende Verfahren während eines Trainingsprozesses erlernen, welcher Hardware-Identifikator für eine oder mehrere Prozessoreinheiten bei bestimmten Temperaturen zu erzeugen ist. Wird anschließend ein Hardware-Identifikator bzw. dem Hardware-Identifikator zugeordnete Messwerte bei einer bestimmten Temperatur ausgelesen, so kann das auf maschinellem Lernen basierende Verfahren beispielsweise einen einheitlichen Hardware-Identifikator berechnen, der eine eindeutige Identifizierung der Prozessoreinheit erlaubt. Auf diese Weise können temperaturabhängige Effekte kompensiert werden, sodass unabhängig von der aktuellen Umgebungstemperatur immer derselbe Hardware-Identifikator für eine Prozessoreinheit ausgegeben wird.

Ferner wird zur Lösung der vorstehend beschriebenen Aufgabe ein Verfahren zum Rekonstruieren eines digitalen Schlüssels durch eine Prozessoreinheit vorgeschlagen, wobei das Verfahren die nachfolgenden Schritte aufweist:
- Empfangen eines Anwendungscodes von einem Computersystem, wobei in dem Anwendungscode eine Folge von Anweisungen und ein digitaler Schlüssel abgespeichert sind; und wobei der digitale Schlüssel mindestens zwei Schlüsselteile aufweist, die nicht zusammenhängend in dem Anwendungscode hinterlegt sind;
- Zusammensetzen des digitalen Schlüssels aus den mindestens zwei Schlüsselteilen.

Die Prozessoreinheit verfügt im Vorfeld über Informationen darüber, an welchen Stellen des Anwendungscode die einzelnen Schlüsselteile hinterlegt sind. Beispielsweise kann der Prozessoreinheit bekannt sein, dass ein spezifisches Feld einer spezifischen Anweisung für die Hinterlegung der Schlüsselteile vorgesehen ist. Auf diese Weise kann die Prozessoreinheit den Anwendungscode nach den spezifischen Feldern durchsuchen, und jeweils die einzelnen Schlüsselteile aus diesen Feldern extrahieren sowie die einzelnen Schlüsselteile anschließend zu einem digitalen Schlüssel zusammensetzen. Ferner kann die Prozessoreinheit dahingehend modifiziert sein, dass sie zusätzliche Anweisungen interpretiert hinsichtlich der Gesamtanzahl der im Anwendungscode hinterlegten Schlüsselteile. Dies ist insofern vorteilhaft, als dass für die spätere Nutzung des Gesamtschlüssels so früh wie möglich seine Länge feststeht. Hierdurch wird zu einem späteren Zeitpunkt auch eine effektive Teilnutzung des Gesamtschlüssels für verschiedene Anwendungsfälle ermöglicht. So ist aus dem Stand der Technik in der Kryptographie hinlänglich bekannt, dass derselbe Schlüssel möglichst nur einem bestimmten Zweck zugeführt werden soll wie etwa Verschlüsselung oder die Bildung einer digitalen Signatur, jedoch nicht beides zugleich.

Bevorzugt kann dabei vorgesehen sein, dass der Anwendungscode als ein RISC-V Anwendungscode ausgebildet ist, wobei die Anweisungen insbesondere als R-Typ Anweisungen ausgebildet sind und wobei das Einbetten der Schlüsselteile bevorzugt in Funct7-Felder erfolgt.

Zudem kann vorgesehen sein, dass das Verfahren den nachfolgenden Schritt aufweist:
- Berechnen eines ersten Schlüssels, in welchem geheime Informationen enthalten sind, aus dem von dem Computersystem empfangenen digitalen Schlüssel und einem Hardware-Identifikator der Prozessoreinheit.

Die Berechnung des ersten Schlüssels erfolgt dabei in Abhängigkeit davon, wie der digitale Schlüssel zuvor berechnet wurde. Dabei kann die Berechnung des ersten digitalen Schlüssels beispielsweise durch Addition, Subtraktion oder durch die Anwendung des XOR-Operators auf den empfangenen digitalen Schlüssel und den Hardware-Identifikator erfolgen.

Bevorzugt kann vorgesehen sein, dass der Hardware-Identifikator spezifische Informationen eines DRAM-Speicherelements der Prozessoreinheit aufweist.

In vorteilhafter Weise kann vorgesehen sein, dass der Hardware-Identifikator als ein temperaturabhängiger Hardware-Identifikator ausgebildet ist.

Dabei kann ferner vorgesehen sein, dass der Hardware-Identifikator Informationen über die spezifische Ladezeit der Kondensatoren des DRAM-Speicherelements oder Informationen über die Latenzzeiten des DRAM-Speicherelements aufweist.

Des Weiteren wird zur Lösung der vorstehend beschriebenen Aufgabe ein Computersystem umfassend eine Recheneinheit, eine Speichereinheit und eine Kommunikationseinheit vorgeschlagen, wobei das Computersystem zum Bereitstellen eines digitalen Schlüssels innerhalb eines Anwendungscodes vorgesehen ist und wobei die Recheneinheit des Computersystems dazu konfiguriert ist,
- einen digitalen Schlüssel bereitzustellen;
- den digitalen Schlüssel in mindestens zwei Schlüsselteile aufzuteilen;
- die Schlüsselteile in mindestens zwei Anweisungen des Anwendungscodes einzubetten; und
- den Anwendungscode an einer Prozessoreinheit zu übermitteln.

Darüber hinaus wird zur Lösung der vorstehend beschriebenen Aufgabe eine Prozessoreinheit zum Rekonstruieren eines digitalen Schlüssels vorgeschlagen, wobei die Prozessoreinheit dazu konfiguriert ist,
- einen Anwendungscode von einem Computersystem zu empfangen, wobei in dem Anwendungscode eine Folge von Anweisungen und ein digitaler Schlüssel abgespeichert sind; und wobei der digitale Schlüssel mindestens zwei Schlüsselteile aufweist, die nicht zusammenhängend in dem Anwendungscode hinterlegt sind;
- den digitalen Schlüssel aus den mindestens zwei Schlüsselteilen zusammenzusetzen.

Ferner kann zur vorteilhaften Ausführung der vorliegenden Aufgabe sowie zur Steigerung der Sicherheit eine kryptographische Recheneinheit vorgesehen werden, die in Zusammenarbeit mit den letztgenannten Einheiten des Gesamtsystems zum einen etwaige Fehlerkorrekturen anwendet, zum anderen aber den Gesamtschlüssel dahingehend von der Prozessoreinheit isoliert, als dass kryptographische Operationen wie etwa Verschlüsselung oder digitale Signaturen von dieser Einheit unmittelbar ausgeführt und nur noch die Ergebnisse dieser Operationen an die Prozessoreinheit übermittelt werden. Hierdurch ergibt sich eine starke Trennung und Geheimhaltung des Gesamtschlüssels von der höheren Programmlogik.

Die vorliegende Erfindung wird nachfolgend anhand der Figuren näher erläutert. Dabei zeigen die
- Fig. 1: ein erstes Ausführungsbeispiel des erfindungsgemäßen Verfahrens,
- Fig. 2: die Verfahrensschritte für die Erzeugung des bereitzustellenden digitalen Schlüssels gemäß einem Ausführungsbeispiel der Erfindung,
- Fig. 3: eine Anweisung mit verschiedenen Feldern, die teilweise belegt und teilweise ungenutzt sind, und
- Fig. 4: ein System umfassend ein Computersystem und eine Prozessoreinheit.

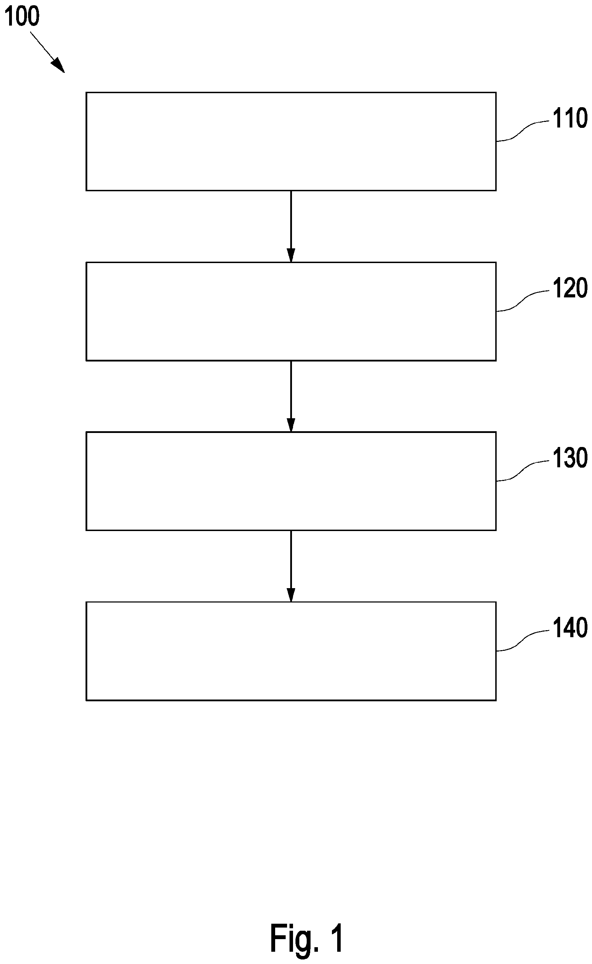

In der Fig. 1 ist ein erstes Ausführungsbeispiel des erfindungsgemäßen Verfahrens 100 dargestellt. In diesem Ausführungsbeispiel weist das erfindungsgemäße Verfahren 100 die Verfahrensschritte 110-140 auf. Im ersten Verfahrensschritt 110 erzeugt ein Computersystem einen bereitzustellenden digitalen Schlüssel. Bei dem digitalen Schlüssel kann es sich um eine zufällig erzeugte Zahl handeln. Der digitale Schlüssel enthält Informationen, welche der Prozessoreinheit in einer sicheren Weise bereitgestellt werden sollen, so dass potenzielle Angreifer diesen Schlüssel nicht ohne Weiteres rekonstruieren können. Im zweiten Verfahrensschritt 120 wird der digitale Schlüssel in mindestens zwei Schlüsselteile aufgeteilt. In der Praxis kann der digitale Schlüssel in mehrere 10, in mehrere 100 oder aber auch in mehrere 1000 Schlüsselteile aufgeteilt werden. Das erfindungsgemäße Prinzip bleibt dabei unabhängig von der genauen Anzahl der Schlüsselteile gleich. Anschließend werden im dritten Verfahrensschritt 130 die jeweiligen Schlüsselteile in mindestens zwei Anweisungen 20 des Anwendungscode eingebettet. Gemäß einer besonders effizienten Ausführungsform der vorliegenden Erfindung kann die Einbettung der Schlüsselteile in spezifische Felder von Anweisungen erfolgen, die im Normalfall ungenutzt bleiben. Dadurch kann ein digitaler Schlüssel in einen Anwendungscode eingebettet werden, ohne dass die Gesamtgröße des Anwendungscodes beeinträchtigt wird. Dies ist einerseits dahingehend besonders effizient, da ein digitaler Schlüssel integriert werden kann, ohne die von dem Anwendungscode beanspruchte Datenmenge zu erhöhen. Andererseits kann dadurch vermieden werden, dass ein potenzieller Angreifer aufgrund der Größe des Anwendungscodes darauf schließen kann, ob der vorliegende Anwendungscode einen Schlüssel enthält oder nicht. Beispielsweise kann es sich bei dem Anwendungscode um einen RISC-V Anwendungscode handeln, wobei das Einbetten der Schlüsselteile in Funct7-Felder der R-typ Anweisungen erfolgt. Anschließend wird im vierten Verfahrensschritt 140 der Anwendungscode von dem Computersystem an die Prozessoreinheit übermittelt. Die Prozessoreinheit kann dann den digitalen Schlüssel aus dem empfangenen Anwendungscode rekonstruieren.

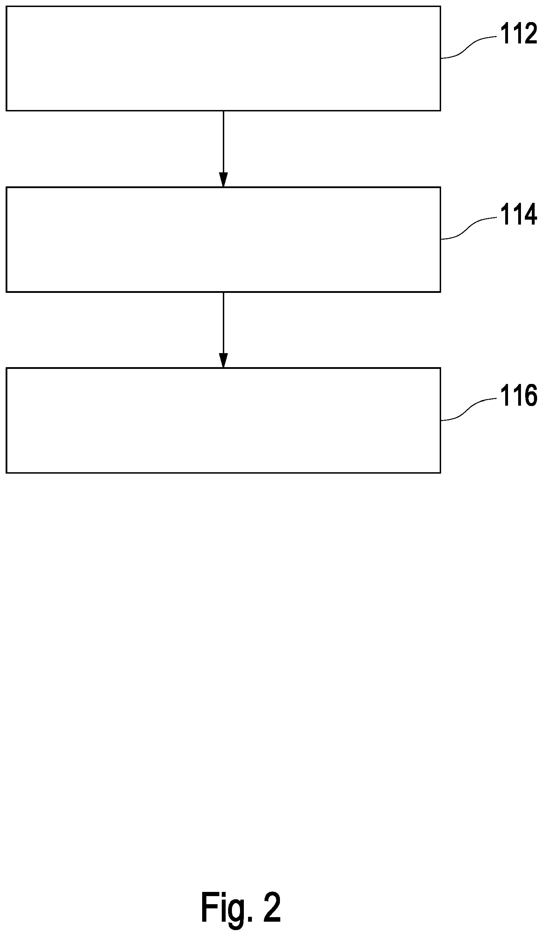

In der Fig. 2 sind die Verfahrensschritte für das Erzeugen (Schritt 110 in der Fig. 1) des bereitzustellenden digitalen Schlüssels durch das Computersystem gemäß einem ersten Ausführungsbeispiels Erfindung dargestellt. In einem ersten Teilschritt 112 wird ein erster Schlüssel erzeugt, in welchem geheime Informationen enthalten sind, die an die Prozessoreinheit übermittelt werden sollen. Der erste Schlüssel wird vor der Übertragung an die Prozessoreinheit unter Verwendung eines hardwarebasierten Schlüssels verschlüsselt, so dass ein potenzieller Angreifer diesen ersten Schlüssel nicht ohne Weiteres rekonstruieren kann. Im zweiten Teilschritt 114 wird ein Hardware-Identifikator der Prozessoreinheit ausgelesen. Der Hardware-Identifikator (auch als Hardware-ID bezeichnet) weist eine eindeutige Kennung der Prozessoreinheit auf und ermöglicht dadurch eine eindeutige Identifizierung der Prozessoreinheit. Insbesondere kann der Hardware-Identifikator spezifische Informationen eines DRAM-Speicherelements der Prozessoreinheit aufweisen. In einem dritten Teil Schritt 116 wird der bereitzustellende digitale Schlüssel, der an die Prozessoreinheit übermittelt wird, aus dem ersten Schlüssel und dem Hardware-Identifikator berechnet. Wie bereits vorstehend ausgeführt, kann die Berechnung beispielsweise durch eine Addition, eine Subtraktion oder durch Anwendung des XOR-Operators auf den ersten digitalen Schlüssel und den Hardware-Identifikator erfolgen. Dabei können der erste digitale Schlüssel und der Hardware-Identifikator beispielsweise als binäre Zahlen mit jeweils 128 Bit oder 256 Bit ausgebildet sein.

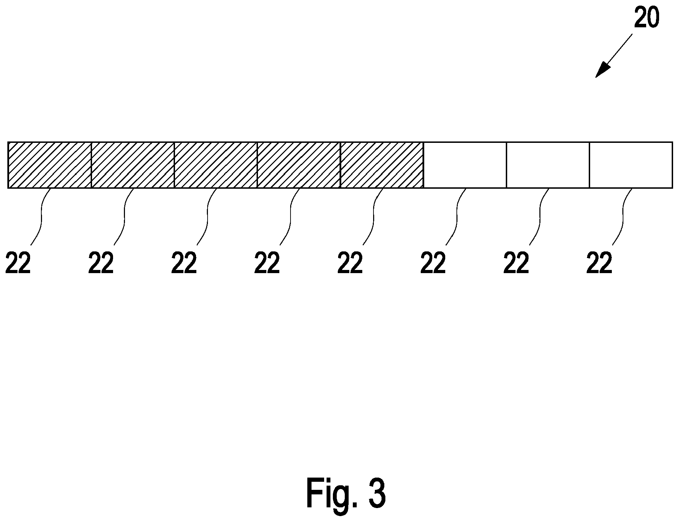

In der Fig. 3 ist eine Anweisung 20 mit verschiedenen Feldern 22 dargestellt, wobei die Felder 22 teilweise belegt und teilweise ungenutzt ist. Beispielsweise kann vorgesehen sein, dass jedes Feld 22 eine Länge von 10 Bit aufweist. Die in der Fig. 3 dargestellte Anweisung 20 kann somit 80 Bits umfassen. Von den insgesamt acht Feldern 22 sind fünf Felder 22 mit Informationen belegt, welche die Anweisung 20 betreffen. Diese sind in der Fig. 3 als schraffierte Felder 22 dargestellt. Weiterhin umfasst die in der Fig. 3 dargestellte Anweisung 20 drei Felder 22, die ungenutzt sind. Die ungenutzten Felder 22 eignen sich besonders gut als Container zur Aufnahme der Schlüsselteile. Werden die Schlüsselteile in diesen Containern hinterlegt, kann der digitale Schlüssel in einer besonders effizienten Weise bereitgestellt werden, ohne die durch den Anwendungscode beanspruchte Datenmenge zu verändern.

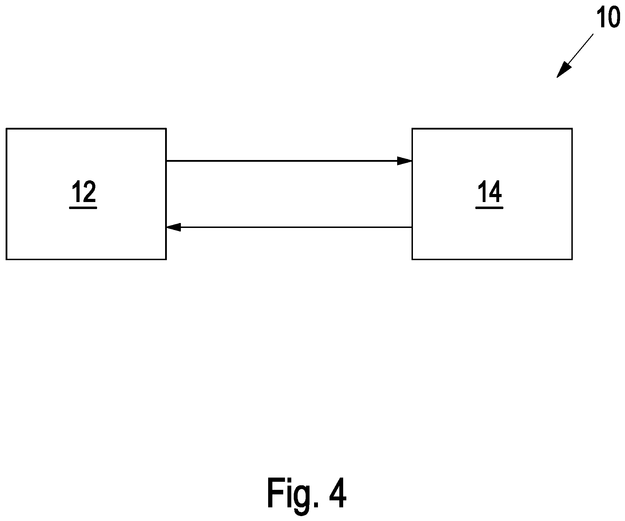

In der Fig. 4 ist ein System 10 abgebildet, dass ein Computersystem 12 und eine Prozessoreinheit 14 aufweist. Bei dem in der Fig. 4 gezeigtem Ausführungsbeispiel besteht zwischen dem Computersystem 12 und der Prozessoreinheit 14 eine bidirektionale Kommunikation. Dabei kann das Computersystem 12 beispielsweise einen Hardware-Identifikator der Prozessoreinheit 14 auslesen und anschließend den bereitzustellenden digitalen Schlüssel aus einem ersten Schlüssel, in welchem geheime Informationen enthalten sind, und dem Hardware-Identifikator berechnen. Auf diese Weise kann das Computersystem 12 einen bereitzustellenden Schlüssel erzeugen, der mit Hardware-Informationen der Prozessoreinheit 14 verschlüsselt ist. Nachdem der bereitzustellende digitale Schlüssel durch das Computersystem 12 erzeugt wurde, kann der bereitzustellende digitale Schlüssel in mindestens zwei Schlüsselteile aufgeteilt werden, wobei die einzelnen Schlüsselteile in mindestens zwei Anweisungen des Anwendungscode eingebettet werden, bevor der Anwendungscode an die Prozessoreinheit 14 übermittelt wird.

### BEZUGSZEICHENLISTE

- 10: System
- 12: Computersystem
- 14: Prozessoreinheit
- 20: Anweisung
- 22: Feld
- 100: Verfahren
- 110: erster Verfahrensschritt
- 112: erster Teilschritt
- 114: zweiter Teilschritt
- 116: dritter Teilschritt
- 120: zweiter Verfahrensschritt
- 130: dritter Verfahrensschritt
- 140: vierter Verfahrensschritt

## Patentansprüche

1. Verfahren (100) zum Bereitstellen eines digitalen Schlüssels durch ein Computersystem (12) für eine Prozessoreinheit (14), wobei der digitale Schlüssel innerhalb eines Anwendungscodes bereitgestellt wird und wobei in dem Anwendungscode eine Folge von Anweisungen (20) abgespeichert ist, **dadurch gekennzeichnet, dass** das Verfahren (100) die nachfolgenden Schritte aufweist:
- Erzeugen (110) eines bereitzustellenden digitalen Schlüssels durch ein Computersystem (12);
- Aufteilen (120) des digitalen Schlüssels in mindestens zwei Schlüsselteile;
- Einbetten (130) der Schlüsselteile in mindestens zwei Anweisungen (20) des Anwendungscodes; und
- Übermitteln (140) des Anwendungscodes von dem Computersystem (12) an die Prozessoreinheit (14).

2. Verfahren (100) nach Anspruch 1, **dadurch gekennzeichnet, dass** das Einbetten (130) der Schlüsselteile in mindestens zwei Anweisungen (20) des Anwendungscodes das Einbetten der Schlüsselteile in spezifische Felder der Anweisungen (20) umfasst, die typischerweise ungenutzt bleiben.

3. Verfahren (100) nach Anspruch 1 oder 2, **dadurch gekennzeichnet, dass** der Anwendungscode als ein RISC-V Anwendungscode ausgebildet ist, wobei die Anweisungen (20) insbesondere als R-Typ Anweisungen ausgebildet sind und wobei das Einbetten der Schlüsselteile bevorzugt in Funct7-Felder erfolgt.

4. Verfahren (100) nach einem der Ansprüche 1 bis 3, **dadurch gekennzeichnet, dass** Erzeugen (110) des bereitzustellenden digitalen Schlüssels durch das Computersystem (12) folgende Schritte aufweist:
- Erzeugen (112) eines ersten Schlüssels, in welchem geheime Informationen enthalten sind, die an die Prozessoreinheit (14) übermittelt werden sollen;
- Auslesen (114) eines Hardware-Identifikators, wobei der Hardware-Identifikator eine eindeutige Kennung der Prozessoreinheit (14) aufweist; und
- Berechnen (116) des bereitzustellenden digitalen Schlüssels aus dem ersten Schlüssel und dem Hardware-Identifikator.

5. Verfahren (100) nach Anspruch 4, **dadurch gekennzeichnet, dass** der Hardware-Identifikator spezifische Informationen eines DRAM-Speicherelements der Prozessoreinheit (14) aufweist.

6. Verfahren (100) nach Anspruch 4 oder 5, **dadurch gekennzeichnet, dass** das Berechnen des bereitzustellenden digitalen Schlüssels aus dem ersten Schlüssel und dem Hardware-Identifikator die Anwendung einer XOR-Operation auf den ersten Schlüssel und den Hardware-Identifikator umfasst.

7. Verfahren (100) nach einem der Ansprüche 4 bis 6, **dadurch gekennzeichnet, dass** der Hardware-Identifikator als ein temperaturabhängiger Hardware-Identifikator ausgebildet ist.

8. Verfahren (100) nach Anspruch 7, **dadurch gekennzeichnet, dass** der Hardware-Identifikator Informationen über die spezifische Ladezeit der Kondensatoren des DRAM-Speicherelements oder Informationen über die Latenzzeiten des DRAM-Speicherelements aufweist.

9. Verfahren (100) nach einem der Ansprüche 4 bis 8, **dadurch gekennzeichnet, dass** der Hardware-Identifikator durch ein auf maschinelles Lernen basierendes Verfahren (100) ermittelt wird.

10. Verfahren zum Rekonstruieren eines digitalen Schlüssels durch eine Prozessoreinheit (14), **dadurch gekennzeichnet, dass** das Verfahren die nachfolgenden Schritte aufweist:
- Empfangen eines Anwendungscodes von einem Computersystem (12), wobei in dem Anwendungscode eine Folge von Anweisungen (20) und ein digitaler Schlüssel abgespeichert sind; und wobei der digitale Schlüssel mindestens zwei Schlüsselteile aufweist, die nicht zusammenhängend in dem Anwendungscode hinterlegt sind;
- Zusammensetzen des digitalen Schlüssels aus den mindestens zwei Schlüsselteilen.

11. Verfahren nach Anspruch 10, **dadurch gekennzeichnet, dass** der Anwendungscode als ein RISC-V Anwendungscode ausgebildet ist, wobei die Anweisungen (20) insbesondere als R-Typ Anweisungen ausgebildet sind und wobei das Einbetten (130) der Schlüsselteile bevorzugt in Funct7-Felder erfolgt.

12. Verfahren nach Anspruch 10 oder 11, **dadurch gekennzeichnet, dass** das Verfahren ferner den nachfolgenden Schritt aufweist:
- Berechnen eines ersten Schlüssels, in welchem geheime Informationen enthalten sind, aus dem von dem Computersystem (12) empfangenen digitalen Schlüssel und einem Hardware-Identifikator der Prozessoreinheit.

13. Verfahren nach einem der Ansprüche 10 bis 12, **dadurch gekennzeichnet, dass** der Hardware-Identifikator spezifische Informationen eines DRAM-Speicherelements der Prozessoreinheit (14) aufweist.

14. Verfahren nach einem der Ansprüche 10 bis 13, **dadurch gekennzeichnet, dass** der Hardware-Identifikator als ein temperaturabhängiger Hardware-Identifikator ausgebildet ist.

15. Verfahren nach einem der Ansprüche 10 bis 14, **dadurch gekennzeichnet, dass** der Hardware-Identifikator Informationen über die spezifische Ladezeit der Kondensatoren des DRAM-Speicherelements oder Informationen über die Latenzzeiten des DRAM-Speicherelements aufweist.
